# EUROPÄISCHE PATENTANMELDUNG

(11) **EP 1 513 126 A1**
(43) Veröffentlichungstag der Anmeldung: **09.03.2005**
(21) Anmeldenummer: 04020360.6
(22) Anmeldetag: 27.08.2004
(51) Int. Cl.: G09B 5/02, G06F 3/033

(54) **Tafelsystem**

(30) Priorität: 04.09.2003 DE 20314021 U
(71) Anmelder: Conen GmbH + Co. KG, 54497 Gonzerath (DE)
(72) Erfinder: Conen, Gerd, 54497 Gonzerath (DE)
(74) Vertreter: Heyner, Klaus, Dr.-Ing.

(57) **Zusammenfassung**

Die Erfindung betrifft ein Tafelsystem zur Verwendung für Lehr- und Demonstrationszwecke bei Aus- und Weiterbildungsveranstaltungen für den Präsenzunterricht in Lehreinrichtungen, wie z. B. in Schulen, Akademien oder Universitäten.
Nach Vorgabe der Erfindung besteht das neue Tafelsystem (11) mindestens aus einer ersten, als Kreidetafel oder stahlemaillierte Weiß- oder Grüntafel und dgl. (1) ausgebildeten Tafelfläche sowie einer zweiten, als Whiteboard (2) ausgebildeten Projektions- und Präsentationstafel mit einer mit Whiteboardmarkern beschreibbaren Oberfläche, wobei die Kreidetafel oder stahlemaillierte Weiß- oder Grüntafel und dgl. (1) sowie das Whiteboard (2) in einer gemeinsamen Rahmenkonstruktion (3) zusammengefasst sind.

Dabei weist das Whiteboard (2) eine elektromagnetische Oberfläche (4) oder eine berührungssensitive Oberfläche auf, die in Verbindung mit einem internen Controller (5) zur Steuerung der interaktiven Bedienung des Whiteboards (2) und einem externen PC (6), einem Beamer (9) sowie einem für die Ausführung mit elektromagnetischer Oberfläche (4) vom Nutzer zu führenden elektronischen Stift (7) bzw. für die Ausführung mit berührungssensitiver Oberfläche vom Nutzer auszuübenden mechanischen Druck eine interaktive Bedienung gestattet.

## Beschreibung

Die Erfindung betrifft ein Tafelsystem zur Verwendung für Lehr- und Demonstrationszwecke bei Aus- und Weiterbildungsveranstaltungen für den Präsenzunterricht in Lehreinrichtungen, wie z. B. in Schulen, Akademien oder Universitäten.

Tafeln werden schon seit Hunderten von Jahren zur Wissensvermittlung eingesetzt. Während früher kleinformatige mit Kreide beschreibbare Schiefertafeln Anwendung fanden, werden seit dem letzten Jahrhundert großformatige metallische und magnetische Klapp- und Schiebetafeln oder Kombinationen daraus in Klassenzimmern, Hörsälen oder Präsentationsräumen eingesetzt. Trotz dieser scheinbar antiquierten Lehrmethode der Wissensvermittlung bietet die Kreidetafel einen entscheidenden pädagogischen Vorteil. Das Schreiben an der Tafel erzwingt ein Unterrichtstempo, was angemessen zum Stoff des Unterrichts ist. Insbesondere in naturwissenschaftlichen Fächern oder bei der Unterrichtung von erklärungsbedürftigen Stoffgebieten kann vom Vortragenden geschrieben und gleichzeitig laut mitgedacht werden. Gegebenenfalls kann der Lehrer oder Referent auf gestellte Fragen sofort eingehen, was den Gedankengang des Vortragenden besser nachvollziehbar erscheinen lässt und damit die Stoffvermittlung erleichtert.

Moderne Präsentationstechniken bestehen heute im Einsatz von Overhead-Projektoren oder Beamern. Konzentriertes Wissen kann dabei bereits im Vorfeld auf Folien oder digitalen Datenträger vorbereitet, kopiert und dauerhaft gespeichert werden. Zur Präsentation dieses Wissens sind neben dem Overhead-Projektor oder dem Beamer ein Whiteboard oder zumindestens eine weiße Projektionswand als Projektionsfläche notwendig.

Diese Projektionsflächen müssen, sofern die konventionelle Wissensvermittlung mittels der Kreidetafel mit den modernen Präsentationstechniken kombiniert werden sollen, im Unterrichts- oder Präsentationsraum bereitgehalten werden.
Dies führt in vielen Räumen zu Platzproblemen, da die Breite des Raumes eine Nebeneinander-Aufstellung der verschiedenen Präsentationstechniken nur selten zulässt. Ein weiterer Nachteil besteht darin, dass der Blick der Unterrichtenden zwischen der beschriebenen Tafel und der genutzten Projektionsfläche ständig wechselt, was gegebenenfalls zu Unkonzentriertheiten der Zuhörer führt.

Aus EP 03 47 725 A2 ist eine elektronische Tafel zur Verarbeitung von Bildinformationen, die dem auf der Schreibfläche dargestellten Bild oder dergleichen entsprechen, sowie zugehörige Hilfsmittel, wie etwa Schreibgeräte, bekannt. Die elektronische Tafel umfasst ein Schreibwerkzeug mit einem ersten Schwingkreis, ein Löschwerkzeug mit einem zweiten Schwingkreis, einen Tafelkörper mit einer elektronischen Schreibfläche, einen in dem Tafelkörper in enger Nachbarschaft zu der Schreibfläche angeordneten Erfassungsteil mit einer Erzeugungseinrichtung für Wellen, die in der Lage ist, elektrische Wellen zur Anregung wenigstens eines der Schwingkreise zu erzeugen, eine Koordinaten-Erfassungseinrichtung zur Bestimmung von Koordinatenwerten und eine Identifizierungseinrichtung zum Identifizieren des Schreib- und Löschwerkzeugs. Das Schreibwerkzeug und das Löschwerkzeug weisen Schwingkreise auf, deren Abstimmfrequenz voneinander verschieden ist. Diese Erfindung besteht nur aus einer einzigen elektronisch abtastbaren Fläche.
Mit JP 62-114370 A wird ein elektronisches Tafelsystem zum Identifizieren von Buchstaben und Grafiken in einer besonders guten Qualität beschrieben. Gegenstand dieser Erfindung ist ein Tafelsystem, das zwei Monitore und zwei elektronisch abtastbare Tafeln umfasst. Jeweils eine elektronische Tafel und ein Monitor sind innerhalb eines Raumes (A bis B) angeordnet und bilden somit ein zugehöriges Paar. Wenn der Bediener im Raum B ein Zeichen oder eine Grafik mittels eines Schreibgerätes auf die Oberfläche der elektronischen Tafel schreibt, wird die Position dieses Zeichens bzw. Grafik mittels einer Erkennungssoftware erkannt und auf den zugehörigen Monitor als "tatsächliches" Zeichen bzw. Grafik übertragen. Ferner erfolgt die Übertragung dieses "tatsächlichen" Zeichens auf den Monitor im Raum A bzw. optional auf die zugehörige elektronische Tafel. Dieses Tafelsystem ist ausschließlich als elektronische Tafel und zugehörigem Monitor mit Steuer- bzw. Erkennungssoftware ausgeführt.
Gegenstand von JP 61-041266 A ist eine elektronische Wandtafel, auf deren Vorderseite ein mittels Rollen geführtes beschreibbares Medium und auf deren Rückseite ein Whiteboard ausgebildet ist. Zur Nutzung dieser elektronischen Wandtafel schreiben die Nutzer Muster, Zeichen usw. auf das mit einem Stift beschreibbare Medium, wobei zur Aufnahme dieser Muster, Zeichen usw. ein Knopf eines Bedienfeldes vom Nutzer gedrückt wird. Auf diese Weise liest ein optisches Leseelement die Muster, Zeichen usw. beim Aufrollen dieses beschreibbaren Mediums mittels eines Haltelements. Diese geschriebenen Muster, Zeichen usw. werden in Form von digitalen Signalen von einem Aufnahmeteil unter Verwendung eines Verstärkers und eines Analog-Digital-Wandlers aufgenommen. Das auf der Rückseite der elektronischen Wandtafel platzierte Whiteboard kann benutzt werden, indem ein Teil des Hauptkorpus der Wandtafel um 180° gedreht wird. Besonders nachteilig an dieser Erfindung ist der Umstand, dass das Whiteboard (Rückseite der Wandtafel) und das beschreibbare Medium (Vorderseite der Wandtafel) nur alternativ, aber nicht gleichzeitig benutzt werden können.
In JP 10-067198 A wird eine elektronische Wandtafel beschrieben, die zum Zwecke des vollständigen Entfernens ohne etwaige Rückstände von auf die Wandtafel geschriebenen Buchstaben und Zeichen entwickelt wurde. Die elektronische Wandtafel besteht hierbei aus einer Schreibfläche, die in einem Rahmen gehaltert ist. Im Bereich der sich vertikal erstreckenden Seitenkanten der Schreibfläche sind zwei parallel zueinander beabstandete Laufschienen platziert. Der erfindungsgemäße Radierer besteht aus einem als Filz ausgebildeten Fasermaterial, das die Schreibfläche unter Druckbeaufschlagung kontaktiert, und erstreckt sich dabei zwischen den Laufschienen.

Zur Abhilfe der vorgenannten Probleme wurde auch hilfsweise versucht, ein als Projektions- und Präsentationsfläche eingesetztes Whiteboard über oder vor die Tafel zu hängen oder zu stellen. Dies führte dazu, dass Rüstzeiten benötigt werden, die eine effektive Wissensvermittlung behindern. Darüber hinaus ist das Handling bei gleichzeitiger Benutzung der Tafel und des Whiteboards umständlich und führte meist dazu, dass sich eine kombinierte Nutzung in dieser Form nicht durchsetzen konnte.

Aufgabe der Erfindung ist es deshalb, ein Tafelsystem zu entwickeln, mit dem unter Beibehaltung der pädagogischen Vorteile einer Kreidetafel oder einer stahlemaillierten Weiß- oder Grüntafel und dgl. sowie unter Verwendung Neuer Kommunikationssysteme und moderner Präsentationstechniken die Methodik und Didaktik bei der effektiven Wissensvermittlung anwendungsfreundlicher und zielgerichteter umgesetzt werden können.

Diese Aufgabe wird erfindungsgemäß dadurch gelöst, indem ein Tafelsystem vorgesehen ist, dass aus mindestens einer ersten, als Kreidetafel oder einer stahlemaillierten Weiß- oder Grüntafel und dgl. ausgebildeten Tafelfläche und einer zweiten, als Whiteboard ausgebildeten Projektions- und Präsentationstafel mit einer mit Whiteboardmarkern beschreibbaren Oberfläche besteht, wobei die Kreidetafel und das Whiteboard in einer gemeinsamen Rahmenkonstruktion zusammengefasst sind. Dabei kann die Rahmenkonstruktion des Tafelsystems aus sich in horizontaler Richtung (z.B. Klapptafel) oder in vertikaler Richtung (z.B. Mehrflächen-Pylontafel) erstreckenden Tafeln bestehen.

Das als Flächentafel in vertikaler Anordnung oder Mittelfläche einer Klapptafel ausgeführte Whiteboard weist erfindungsgemäß eine elektromagnetische oder berührungssensitive Oberfläche auf, die in Verbindung mit einem internen Controller zur Steuerung der interaktiven Bedienung des Whiteboards und einem externen PC und Beamer sowie einem für den Fall der elektromagnetischen Oberfläche vom Nutzer zu führenden elektronischen Stift bzw. für den Fall der berührungssensitive Oberfläche vom Nutzer auszuübenden mechanischen Druck die interaktive Bedienung gestattet.

Beide Tafeln bilden in ihrer Kombination in Verbindung mit der sie aufnehmenden Rahmenkonstruktion ein Tafelsystem, dass die Vorzüge einer Kreidetafel oder einer stahlemaillierten Weiß- oder Grüntafel und dgl. sowie eines interaktiven Whiteboards in einem geringen Bauraum vereint. Da das Tafelsystem üblicherweise an einer Stirnwand des Raumes mittig an der Wandfläche angeordnet wird, wird der Focus des Betrachters nur auf einen schmalen Wandausschnitt gelenkt, was die Konzentration der Teilnehmer einer Präsentation erhöht.
Die Kreidetafel oder einer stahlemaillierten Weiß- oder Grüntafel und dgl. sowie die Projektions- und Präsentationstafel können in Abhängigkeit der Aufgabenstellung wahlweise vom Referenten gleichzeitig oder wechselseitig benutzt werden. Da beide Tafeln in einer gemeinsamen Rahmenkonstruktion zusammengefasst sind, können sie bequem in ihrer Position gegeneinander oder zueinander verstellt oder verfahren werden.

Die Tafelflächen der Tafeln weisen in ihrer Ausdehnung und Dicke etwa gleiche Abmessungen auf, was die Fertigung der Rahmenkonstruktion deutlich vereinfacht. Die Rahmenkonstruktion besteht vorzugsweise aus einem Leichtmetall und weist zur Verstellung der Tafeln einen innerhalb der Rahmenkonstruktion angeordneten und geführten Mechanismus auf.

Das Whiteboard, welches mit einer abwischbaren glatten weißen und elektromagnetischen oder berührungssensitiven Kunststoffoberfläche ausgestattet ist, weist drei verschieden nutzbare Funktionen auf.
Zunächst dient die weiße reflexionsfreie Kunststoffoberfläche als geeignete Projektionsfläche für Overhead-Projektionen oder Beamer-Projektionen. Des Weiteren kann das Whiteboard in herkömmlicher Weise mit einem konventionellen Whiteboardmarker beschrieben werden und mittels eines geeigneten Schwammes oder Lappens wieder gereinigt werden.
Ein signifikantes Merkmal des Whiteboards ist jedoch, dass es als interaktive digitalisierte Tafel nutzbar ausgebildet ist.

Das Whiteboard weist dazu einen Controller mit einer Sende- und Empfangseinheit auf, die mit einem PC oder angeschlossenen Peripheriegeräten drahtlos kommuniziert. Die Verbindung zwischen dem Controller und des PC ist bidirektional, d. h., Datenpakete werden vom und zum PC gesandt.
Ergänzend zur elektromagnetischen oder berührungssensitiven Oberfläche des Whiteboards und der drahtlosen Funkverbindung zwischen dem Controller des Whiteboards und dem zugehörigen PC sind eine geeignete Software sowie ggf. ein elektronischer Stift zur entsprechenden Kontaktierung der Pixelfelder des Whiteboards vorgesehen.

Das Whiteboard wird durch den Controller im aktivierten Zustand derart digitalisiert, dass für den Benutzer nicht sichtbare Pixelfelder ausgebildet werden. Diese Pixelfelder werden mittels des elektronischen Stifts (elektromagnetische Oberfläche) oder mittels mechanischem Druck (berührungssensitive Oberfläche) gemäß der gewünschten Funktion kontaktiert, wobei diese Signale mittels des Controllers als Echtzeit-Datenstreaming zum PC geleitet werden. Die dabei vorgenommenen Änderungen oder Ergänzungen am Inhalt einer projektierten Präsentationsfolie werden dabei nahezu ohne Zeitversatz mittels eines Beamers unmittelbar angezeigt.

Im Fall der elektromagnetischen Tafel ist der elektronische Stift zur Kontaktierung der Pixelfelder als Zeigerinstrument wie eine aus dem Stand der Technik vorbekannte Computermaus aufgebaut, nämlich mit einer Menü- und einer Kontextmenü-Taste. Diese beiden Tasten befinden sich bedienungsfreundlich an dem unteren Ende des elektronischen Stifts. Der elektronische Stift weist an einem axialen Ende ferner einen elektronischen Radiergummi auf.

Auf der Frontseite des Whiteboards sind besonders vorteilhaft mehrere Funktionsfelder angeordnet, die vorbelegt sein können oder frei programmiert werden können. Durch eine Kontaktierung dieser Funktionsfelder kann der Referent in sehr einfacher Weise gewünschte Anwendungen starten und damit hardwarebasierend die Aktivierung des interaktiven Whiteboards auslösen. Die Kontaktierung erfolgt üblicherweise durch die Finger des Referenten.

Eine weitere Möglichkeit, die Aktivierung des interaktiven Whiteboards auszulösen besteht darin, am PC per Mausklick die entsprechende Software-Steuerroutine zu starten.

Die interaktive Bedienung des Whiteboards sichert somit eine aktive Teilnahme der Zuhörer während der Präsentation und führt zu einer lebendigeren Präsentation.

Die Verbindung zwischen dem Controller des Whiteboards, dem PC und gegebenenfalls auch einem Ausgabegerät ist als drahtlose Verbindung ausgebildet. Damit kann auf die oftmals teure und unflexible Verkabelung der Komponenten verzichtet werden. Den mit der drahtlosen Verbindung einhergehenden Nachteilen, wie z. B. die geringeren Übertragungsraten und die regulatorischen Einschränkungen des verwendeten Frequenzspektrums, stehen hier die signifikanten Vorteile in der Flexibilität der Anordnung der Komponenten, der problemlosen Nachrüstbarkeit und Erweiterbarkeit sowie des nicht notwendigen Wartungsaufwandes gegenüber. Zum Einsatz kommen die Funk- oder Infrarotübertragung. Zur Funkübertragung können kabellose Netzwerke (WLAN's) oder Bluetooth-Verbindungen eingesetzt werden. Die jedoch bevorzugte Bluetooth-Verbindung sichert einen kostengünstigen Zugang zu drahtlosen Kommunikationsnetzwerken und bietet die Basis für einander kompatible Endgeräte. Bluetooth unterstützt Daten- und Spracherkennungsdienste und eignet sich deshalb in besonderem Maße zur Verbindung zwischen dem Controller des Whiteboards, dem PC und gegebenenfalls auch einem Ausgabegerät.

Ein besonderer Vorteil der Erfindung besteht auch darin, dass die zur Steuerung des interaktiven Whiteboards notwendige Software - auf Windows basierend - ist. Dies sichert einerseits in aller Regel die Kompatibilität des PC zu dem bestehenden Intranet des Weiterbildungsdomizils und andererseits eine schnelle Einarbeitungszeit der Referenten in das erfindungsgemäße Tafelsystem mit seiner kommunizierenden Peripherie. Mit dem weiteren Ausbau der Bluetooth-Technologie kann das Tafelsystem auch für das bei Grafikern und Designern bevorzugte - auf Apple-Macintosh oder Linux basierende - Computersystem eingesetzt werden.

In einer bevorzugten Ausgestaltung der Erfindung sind zusätzlich zum Tafelsystem ein oder mehrere auf elektromagnetischer Basis arbeitende Digitalisiertabletts vorgesehen, die über die drahtlose Funkverbindung mit dem Controller des Whiteboards gekoppelt sind. Dokumente, Bilder oder Anmerkungen können damit problemlos auf das Whiteboard projiziert werden. Bei der Verwendung mehrerer Digitalisiertabletts können mehrere Gruppen an gemeinsamen Aufgaben und Projekten arbeiten, was die Flexibilität der Unterrichtsgestaltung wesentlich erhöht.

Grundsätzlich können alle bisher bekannten Tafelmodelle, die mindestens zwei Tafelflächen aufweisen, im Sinne des erfindungsgemäßen Tafelsystems ausgebildet werden.
Das Anwendungsgebiet der Erfindung erstreckt sich also von Klappschiebetafeln, über Klapppylonentafeln bis hin zu zweiflächigen Pylonentafeln oder Pylonen-Doppeltafeln.
Beispielsweise kann das Mittelfeld einer Klappschiebetafel als interaktives Whiteboard fungieren, während dessen die beiden äußeren, klappbaren Flügel eine standardmäßige metallische und gegebenenfalls auch magnetische mit Kreide beschreibbare Oberfläche aufweisen.

Die signifikanten Vorteile und Merkmale der Erfindung gegenüber dem Stand der Technik sind im Wesentlichen:
■ großer Funktionsumfang des Tafelsystems durch wahlweise Nutzung als Kreidetafel oder stahlemaillierte Weiß- oder Grüntafel und dgl., Whiteboard und interaktive Tafel,
■ Zusammenfassung der Kreidetafel oder der stahlemaillierten Weiß- oder Grüntafel und dgl. und des Whiteboard in einer gemeinsamen Rahmenkonstruktion und damit platzsparender als eine separate Kreidetafel und ein separates Whiteboard,
■ Methodik und Didaktik bei der Wissensvermittlung kann effektiver und anwendungsfreundlicher gestaltet werden, womit ein besserer Lernerfolg erzielt wird,
■ robust ausgeführte elektromagnetische oder berührungssensitive Oberfläche des Whiteboards und damit sicher gegen Beschädigungen,
■ drahtlose Datenübertragung gewährleistet Unabhängigkeit in der Standortwahl des PC und in der konstruktiven Gestaltung des Tafelsystems.

Verschiedene Lösungen und Vorteile der Erfindung erschließen sich dem Fachmann des Weiteren aus der folgenden detaillierten Beschreibung einer bevorzugten Ausführungsform unter Einbeziehung der zugehörigen Zeichnungen; in diesen zeigen:
- Fig. 1:: die Detaildarstellung des erfindungsgemäßen Tafelsystems am Beispiel der zweiflächigen Pylonentafel,
- Fig.2:: das Signalflussbild bei Verwendung des Whiteboard als interaktives Schoolboard.

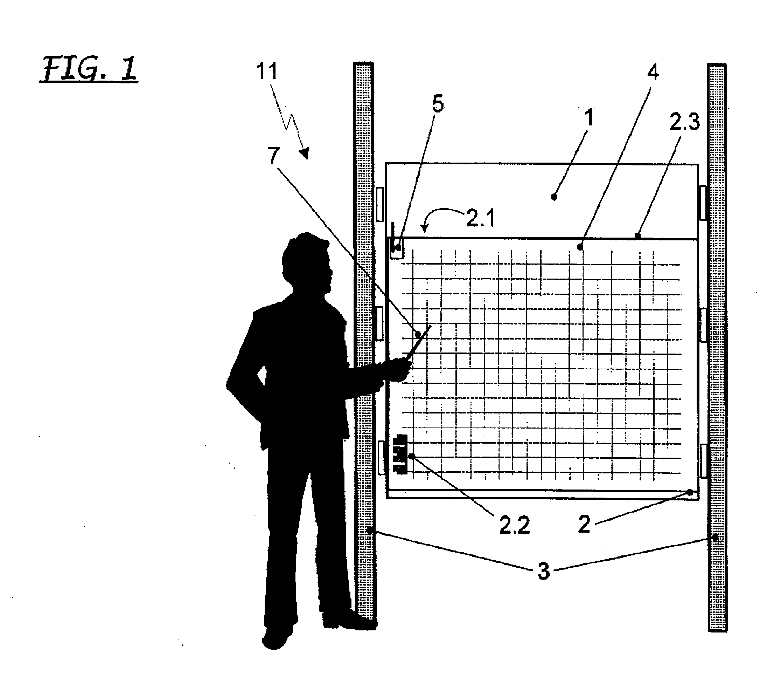

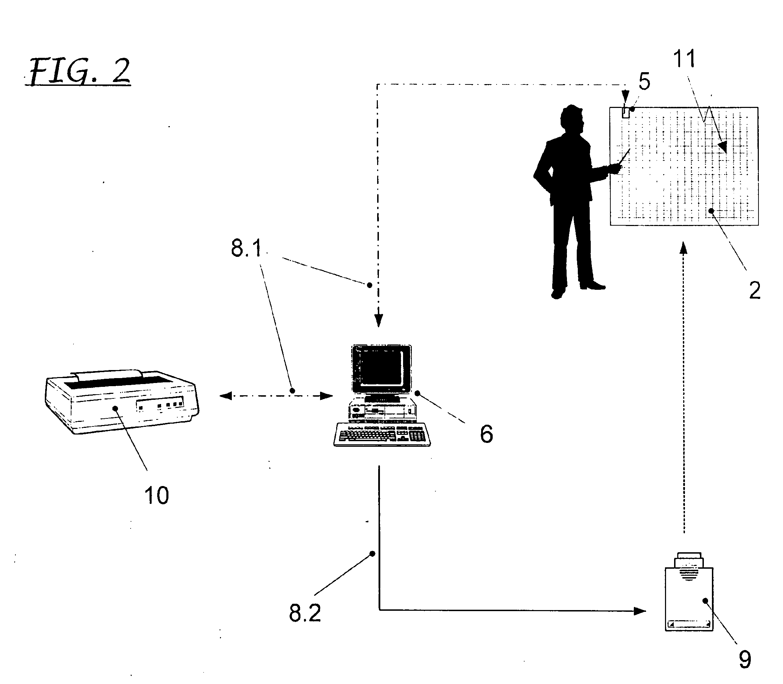

Fig. 1 zeigt eine Detaildarstellung des erfindungsgemäßen Tafelsystems 11 am Beispiel der zweiflächigen Pylonentafel. Das Tafelsystem 11 besteht aus einer Kombination einer konventionellen Kreidetafel 1 und einem interaktiven Whiteboard 2. Die Kreidetafel 1 und das Whiteboard 2 sind dabei in einer gemeinsamen Rahmenkonstruktion 3 zusammengefasst, die in der dargestellten Figur als sich gegenüberstehende Pylone ausgebildet ist. Aus Sicht des Betrachters ist die Kreidetafel 1 hinter dem Whiteboard 2 angeordnet und wird durch dieses, wie dargestellt, nahezu vollständig verdeckt. Bevorzugt weisen die Tafelflächen der Kreidetafel 1 und des Whiteboards 2 in Ausdehnung und Dicke in etwa gleiche Abmessungen auf.
Zur Aufnahme und Führung der Kreidetafel 1 und des Whiteboards 2 weist die Rahmenkonstruktion 3 zwei nichtdargestellte parallel geführte Laufschienen auf, in die die komplementären, passfähigen Rollen oder Gleitelemente, die an den Stirnseiten der Tafeln 1, 2 befestigt sind, formschlüssig eingreifen. Die Kreidetafel 1 und das Whiteboard 2 sind mittels eines nichtdargestellten Mechanismus derart gekoppelt, dass bei einem manuellen Absenken des Whiteboards 2 in Richtung des Fußbodens die Kreidetafel 1 bis zum oberen nichtdargestellten Anschlag der Pylonen verfahren werden kann. Der Mechanismus hat zudem die Aufgabe, die unterschiedlich schweren Kreidetafel 1 und Whiteboard 2 ständig im Gleichgewicht zu halten, so dass nur ein minimaler Kraftaufwand notwendig ist, diese gegeneinander verschieben zu können.
Das Whiteboard 2 weist neben der nutzbaren Projektionsfläche noch zwei zusätzliche Funktionen auf. Zum einen kann die abwischbare glatte weiße Kunststoffoberfläche mit einem Whiteboardmarker in konventioneller Weise beschrieben werden und mittels eines geeigneten Schwammes oder Lappens wieder gereinigt werden. Zum anderen ist die Tafelfläche 4 des Whiteboards 2 elektromagnetisch ausgebildet, was eine interaktive Bedienung desselben gestattet. Die interaktive Bedienung erfordert weiterhin - wie in Fig. 2 dargestellt - einen Controller 5, einen PC 6 mit entsprechender Software und einen vom Nutzer zu führenden elektronischen Stift 7. Der Controller 5 ist an der Rückseite 2.1 des Whiteboards 2 angrenzend an seiner oberen Längskante 2.3 angeordnet und steht im Funkkontakt mit einem PC 6, der beliebig innerhalb des Präsentationsraumes, vorzugsweise jedoch unmittelbar in der Nähe des Referenten, aufgestellt ist. Als drahtlose Funkverbindung 8.1 wird eine zeitgemäße Bluetooth-Verbindung eingesetzt, was den Vorteil hat, dass das Daten-Streaming von und zum PC 6 in Echtzeit ohne Zeitverzögerung realisiert werden kann. Darüber hinaus kann der Controller 5 optional mit weiteren elektronischen Geräten kommunizieren, die nach dem Bluetooth-Standard arbeiten. Die interaktive Bedienung wird letztlich mittels eines vom Nutzer zu führenden elektronischen Stifts 7 realisiert, der zur Bedienung auf der elektromagnetischen Oberfläche 4 des Whiteboards 2 geführt wird. Dieser Stift 7 als Zeigerinstrument ist wie eine aus dem Stand der Technik vorbekannte Computermaus aufgebaut, nämlich mit einer Menü- und einer Kontextmenü-Taste. Diese beiden Tasten befinden sich bedienungsfreundlich an dem unteren Ende des elektronischen Stifts 7. Die Aktivierung der interaktiven Bedienung des Whiteboards kann auf unterschiedliche Weise, entweder Hardware-basierend oder Software-basierend, ausgelöst werden. Im Bereich einer vertikalen Längskante des Whiteboards sind zur Hardwarebasierenden Aktivierung der interaktiven Bedienung mehrere Funktionsfelder 2.2 auf der vom Betrachter linken Seite der Oberfläche 4 des Whiteboards 2 angeordnet, die vorbelegt oder frei programmierbar ausgebildet sein können. Mit den vorbelegten Funktionsfeldern 2.2 können beispielsweise bestimmte Programme oder Anwendungen durch ein bloßes Antippen durch den Anwenders aufgerufen werden. Frei programmierbare Funktionsfelder 2.2 erweitern das Anwendungsspektrum in besonderem Maße. Besonders vorteilhaft können u.a. gespeicherte Präsentationsfolien mit nur einem Tastendruck aufgerufen werden. Die Software-basierende Aktivierung der interaktiven Bedienung des Whiteboards 2 setzt eine entsprechende Software voraus, die vom Anwender komfortabel am PC 6 nur noch mit einem Mausklick gestartet werden muss.
Die eigentliche interaktive Bedienung des Whiteboards 2 hingegen erfordert zusätzlich einen elektronischen Stift 7 zur Kontaktierung der vom Controller 5 auf dem Whiteboard 2 ausgebildeten Pixelfelder.

Fig. 2 illustriert ein Signalflussbild bei Verwendung des Whiteboard 2 des Tafelsystems 11 als interaktives Schoolboard. Die Pfeile symbolisieren die Richtung der Datenströme, wobei eine durchgängige Linie eine drahtgebundene Datenleitung 8.2, eine Strich-Punkt-Leitung eine drahtlose Funkverbindung 8.1 und eine Strich-Strich-Linie einen Projektionsstrahl eines lichtemittierenden Peripheriegerätes, z. B. eines Beamers 9, darstellen.
Der im allgemeinen mit dem Bezugszeichen 6 bezeichnete PC erzeugt einen Computer-Screen, der mittels eines Beamers 9 auf das Whiteboard 2 des Tafelsystems 11 projektiert wird. Die Verbindung zwischen dem PC 6 und dem Beamer 9 ist bevorzugt als drahtgebundene Datenleitung 8.2 ausgeführt. Aus Gründen der Rüstzeiten, der Sicherheit gegen Zerstörungen und der Erzeugung eines unverzerrten Projektionsbildes wird der Beamer 9 unmittelbar unter der Decke des Präsentationsraumes mittels einer nichtdargestellten Halterung befestigt. Die Verdrahtung zwischen dem Befestigungsstandort des Beamers 9 und dem Aufstellort des PC 6 kann im Rahmen etwaiger Sanierungsarbeiten in Unterputzmontage oder nachträglich in Aufputzmontage erfolgen.

Die zum Computerscreen zugehörigen digitalen Informationen werden zwischen dem PC 6 und dem internen Controller 5 des Whiteboards 2 mittels einer drahtlosen, bidirektionalen Funkverbindung 8.1 ausgetauscht. Der Controller 5 ist auf der Rückseite 2.1 des Whiteboards 2 angrenzend an seiner oberen Längskante 2.3 angeordnet und dient zur Steuerung der interaktiven Bedienung des Whiteboards 2 in der Verwendung als Schoolboard. Im aktivierten Zustand der interaktiven Bedienung des Whiteboards 2 digitalisiert der Controller 5 die elektromagnetische Oberfläche 4 des Whiteboards 2 unter Ausbildung von nicht näher beschriebenen Pixelfeldern. Diese für den Anwender nicht sichtbaren Pixelfelder erzeugen beim Berühren mittels eines elektronischen Stiftes 7 ein Schaltsignal, welches nur zwei Zustände kennt. Die Software des Controllers 5 verarbeitet diese Signale und überträgt diese an den PC 6. Die drahtlose Funkverbindung 8.1 zwischen dem PC 6 und dem Controller 5 des Whiteboards 2 ist bevorzugt als Bluetooth-Verbindung ausgebildet, was einerseits zu einem Echtzeit-Datenstreaming und andererseits zu einer Verbindung ohne Datenpaket-Verlust führt.
Ferner kann an den PC 6 ein als Drucker 10 ausgebildetes Ausgabegerät angeschlossen werden, um gewünschte digitale Informationen dem Anwender gedruckt zur Verfügung zu stellen. Die Verbindung zwischen dem Drucker 10 und dem PC 6 ist bevorzugt auch als drahtlose Bluetooth-Verbindung 8.1 ausgebildet, was die Druckernutzung wesentlich vereinfacht. Beispielsweise kann ein Drucker an einem neutralen, frei zugänglichen Raum innerhalb des Aus- und Weiterbildungsdomizils positioniert werden, so dass dieser von mehreren Anwendern gleichzeitig genutzt werden kann, ohne dass auf die Belegung Rücksicht genommen werden muss.

### LISTE DER BEZUGSZEICHEN

- 1: Kreidetafel oder stahlemaillierte Weiß- oder Grüntafel und dgl.
- 2: Whiteboard
- 2.1: Rückseite
- 2.2: Funktionsfelder
- 2.3: Längskante
- 3: Rahmenkonstruktion
- 4: elektromagnetische Oberfläche
- 5: interner Controller
- 6: externer PC
- 7: elektronischer Stift
- 8: Datenverbindung
- 8.1: drahtlose Funkverbindung
- 8.2: drahtgebundene Datenleitung
- 9: Beamer
- 10: Peripherie, Drucker
- 11: Tafelsystem

## Patentansprüche

1. Tafelsystem (11) zur Verwendung für Lehr- und Demonstrationszwecke bei Aus- und Weiterbildungsveranstaltungen, mindestens bestehend aus einer ersten, als Kreidetafel oder stahlemaillierte Weiß- oder Grüntafel und dgl. (1) ausgebildeten Tafelfläche und einer zweiten, als Whiteboard (2) ausgebildeten Projektions- und Präsentationstafel mit einer mit Whiteboardmarkern beschreibbaren Oberfläche, wobei die Kreidetafel oder stahlemaillierte Weiß- oder Grüntafel und dgl. (1) sowie das Whiteboard (2) in einer gemeinsamen Rahmenkonstruktion (3) zusammengefasst sind und das Whiteboard (2) eine elektromagnetische Oberfläche (4) oder eine berührungssensitive Oberfläche aufweist, die in Verbindung mit einem internen Controller (5) zur Steuerung der interaktiven Bedienung des Whiteboards (2) und einem externen PC (6), einem Beamer (9) sowie einem für die Ausführung mit elektromagnetischer Oberfläche (4) vom Nutzer zu führenden elektronischen Stift (7) bzw. für die Ausführung mit berührungssensitiver Oberfläche vom Nutzer auszuübenden mechanischen Druck eine interaktive Bedienung gestattet.

2. Tafelsystem (11) nach Anspruch 1,
**dadurch gekennzeichnet, dass** die Tafeln (1, 2) in ihrer Position gegeneinander oder zueinander verstellt oder verfahren werden können.

3. Tafelsystem (11) nach Anspruch 1 oder 2,
**dadurch gekennzeichnet, dass** das Tafelsystem als Klappschiebetafel, Klapppylonentafel, als mehrflächige Pylonentafel oder als Pylonen-Doppeltafel ausgebildet ist.

4. Tafelsystem (11) nach einem der Ansprüche 1 bis 3,
**dadurch gekennzeichnet, dass** das Whiteboard (2) eine abwischbare glatte weiße Kunststoffoberfläche aufweist.

5. Tafelsystem (11) nach einem der Ansprüche 1 bis 4,
**dadurch gekennzeichnet, dass** der Controller (5) zur Steuerung der interaktiven Bedienung des Whiteboards (2) auf der Rückseite (2.1) des Whiteboards (2) angrenzend an der oberen horizontalen Längskante (2.3) angeordnet ist.

6. Tafelsystem (11) nach einem der Ansprüche 1 bis 5,
**dadurch gekennzeichnet, dass** die Aktivierung der interaktiven Bedienung des Whiteboards (2) bei elektromagnetischer Oberfläche Software-basierend durch den Anwender am PC (6) oder Hardware-basierend durch eine Kontaktierung der Funktionsfelder (2.2) des Whiteboards (2) sowie einer bestehenden drahtlosen Funkverbindung (8.1) zwischen dem PC (6) und dem Controller (5) des Whiteboards (2) realisiert wird.

7. Tafelsystem (11) nach einem der Ansprüche 1 bis 6,
**dadurch gekennzeichnet, dass** als drahtlose Datenübertragung (8.1) eine Infrarot-Verbindung oder eine Funkverbindung vorgesehen ist.

8. Tafelsystem (11) nach einem der Ansprüche 1 bis 7,
**dadurch gekennzeichnet, dass** zur interaktiven Bedienung des Whiteboards (2) bei elektromagnetischer Oberfläche eine geeignete Software, eine drahtlose Funkverbindung (8.1) zwischen dem Controller (5) des Whiteboards (2) und dem PC (6), ein Beamer (9) zur Projektion des PC-Screens sowie ein elektronischer Stift (7) zur entsprechenden Kontaktierung der Pixelfelder des Whiteboards (2) vorhanden ist.
